# EUROPÄISCHE PATENTSCHRIFT

(11) **EP 1 412 112 B1**
(45) Veröffentlichungstag und Bekanntmachung des Hinweises auf die Patenterteilung: **09.11.2005**
(21) Anmeldenummer: 02794542.7
(22) Anmeldetag: 02.08.2002
(51) Int. Cl.: B22F 3/16, B29C 67/20, B22F 3/11, F16C 33/14, F16C 33/20

(54) **VOLLMATERIALLAGER UND VERFAHREN ZU SEINER HERSTELLUNG**
SOLID-MATERIAL BEARING AND A METHOD FOR PRODUCING THE SAME
PALIER EN MATERIAU MASSIF ET SON PROCEDE DE PRODUCTION

(30) Priorität: 03.08.2001 DE 10138058
(43) Veröffentlichungstag der Anmeldung: 28.04.2004
(73) Patentinhaber: Federal-Mogul Deva GmbH, 35260 Stadtallendorf (DE)
(72) Erfinder: ROOS, Udo, 35315 Homberg/Ohm (DE); KRAFT, Erik, 35260 Stadtallendorf (DE)
(74) Vertreter: Fuchs Mehler Weiss & Fritzsche
(86) Internationale Anmeldenummer: PCT/EP2002/008621
(87) Internationale Veröffentlichungsnummer: WO 2003/013767

(56) Entgegenhaltungen:
- DE-A- 4 225 398
- GB-A- 923 642
- US-A- 4 393 563
- US-A- 6 042 778

## Beschreibung

Die Erfindung betrifft ein Verfahren zur Herstellung von selbstschmierenden, wartungsfreien Lagern, insbesondere von Lagerbuchsen und Anlaufscheiben, bei dem mindestens Bronzepulver eingesetzt wird, das Bronzepulver vor dem Sintern in einem formgebenden Werkzeug zu einem Vollmaterialrohling kalt gepresst wird, der Vollmaterialrohling in einem Ofen unter einer Schutzgasatmosphäre gesintert wird und die Poren der Sinterbronze durch Vakuuminfiltration mit einer PTFE aufweisenden Suspension gefüllt werden. Die Erfindung betrifft auch ein selbstschmierendes Vollmateriallager aus Sinterbronze nach dem Patentanspruch 15.

Derzeit existieren verschiedene Typen metallischer, selbstschmierender und wartungsfreier Gleitlager. Dies sind unter anderem:
a. dickwandige gesinterte Gleitlager, die Festschmierstoffe wie Graphit MoS₂, WS₂ enthalten,
b. dickwandige gesinterte Gleitlager, die ölgetränkt sind,
c. dünnwandige Gleitlager, die in die Oberfläche eingewalztes PTFE enthalten,
d. dünnwandige Gleitlager, die in das Gefüge imprägniertes PTFE enthalten,
e. dickwandige gegossene Gleitlager, die makroskopisch verteilte Festschmierstoffe enthalten.

Für Gleitlager des Typs a. werden Pulvermischungen hergestellt, die bereits Festschmierstoffe enthalten. Diese Pulvermischung wird gepreßt und anschließend gesintert. Für diese Verfahren sind nur solche Festschmierstoffe geeignet, die sich bei den Sintertemperaturen von etwa 800° C nicht zersetzen.

Andererseits sind Lager mit derartigen Schmierstoffen wegen der damit unweigerlich verbundenen Verunreinigung der Umgebung des Lagers nicht für alle Anwendungszwecke geeignet. Insbesondere im Lebensmittelbereich sind derartige Lager nicht einsetzbar.

Die Gleitlager des Typs b. haben den Nachteil, daß sie Öl enthalten und somit in vielen Bereichen nicht einsetzbar sind. Die Einsatztemperatur dieses Lagertys ist stark begrenzt, da bei erhöhten Temperaturen ein Austrocknen des Öls stattfindet.

Die Gleitlager des Typs c. versagen nach relativ geringer Verschleißdicke.

Die Gleitlager des Typs d. weisen prinzipiell geringe Reibwerte und Verschleißraten auf, allerdings ist die Dicke der Gleitschicht auf 1 bis 2 mm begrenzt. Die Herstellung solcher Gleitlager wird beispielsweise in der DE 197 53 639.5 A1 beschrieben. Das Verfahren zur Herstellung eines solchen selbstschmierenden, wartungsfreien mehrschichtigen Gleitlagerwerkstoffs sieht vor, daß ein aus unterschiedlichen Korngrößen bestehendes Bronzepulver mit einer mittleren Korngröße von etwa 40 µm und einer dendritischen Kornform auf einen metallischen Stützkörper aufgetragen wird, und daß der Stützkörper mit dem aufgetragenen Bronzepulver in einem Ofen bei etwa 800° C unter einer Schutzgasatmosphäre gesintert wird. Während des Sinterns wird der Stützkörper mit der Bronzeschicht zur Erzeugung einer Porosität zwischen 40 und 70% über die gesamte Schichtdicke heißgewalzt, wobei die Schichtdicke nur etwa 0,5 bis 10 mm beträgt. Mittels einer Vakuuminfiltration werden die Poren mit PTFE gefüllt, so daß sich ein Anteil an PTFE bezogen auf das Gesamtmaterial von bis zu 20 Gew.-% einstellt.

Ferner ist ein Vakuuminfiltrationsverfahren aus der GB 707,065 bekannt, wobei allerdings keine Angaben über Herstellung und Dicken der Sinterschicht gemacht werden.

Aus der US 5,217,814 ist ein Gleitlagermaterial bekannt, das durch Sintern von Cu-Partikeln hergestellt wird. Die Sinterschicht besitzt Dicken unter 1 mm und die Porositäten, die durch den Sintervorgang erzeugt werden, liegen bei 35 Vol.%. Schmiermittel in Form von MoS₂ und Graphit werden in die Poren eingebracht. Die durch den Sintervorgang erzeugte Porosität wird sehr stark durch die Partikelgrößenverteilung bestimmt, so daß oft nicht die gewünschte Homogenität erzielt werden kann.

Aus Dubbel "Taschenbuch für den Maschinenbau" 14. Auflage, Springer Verlag, S. 956, 957 ist es bekannt, bei der Herstellung von Sinterkörpern zur Verdichtung der Metallpulver einen Kaltpreßvorgang vorzuschalten. Mit steigendem Preßdruck nimmt das Verdichtungsverhältnis und somit auch die Dichte und Raumausfüllung zu. Es gibt allerdings keine Hinweise auf den Zusammenhang zwischen Kaltpreßverfahren und Einstellung der Porosität.

Aus der GB 923,642 ist ein Verfahren zur Herstellung von selbstschmierenden Lagern bekannt, bei dem nach einem Kompaktierungsprozess, bei dem ein Vollmaterialrohling aus Bronzepulver hergestellt wird, ein Sintervorgang angeschlossen wird. Zum Kompaktierungsvorgang werden keine Parameter vermittelt. Bezüglich des Sintervorgangs wird lediglich mitgeteilt, dass der Rohling sich beim Sintern ausdehnt. Ziel der GB 923,642 ist es, für den sich an den Sinterprozess anschließenden Imprägnierungsvorgang geeignete Zusätze zum PTFE zur Verfügung zu stellen. Es werden hierfür Zusätze vorgeschlagen, die keine lamellare Struktur besitzen.

Aufgabe der Erfindung ist es, ein Verfahren bereitzustellen, mit dem Vollmateriallager mit Wandstärken bis zu 20 mm gefertigt werden können, die gleichbleibende Gleiteigenschaften während des Betriebs aufweisen.

Diese Aufgabe wird mit einem Verfahren gemäß Anspruch 1 gelöst, bei dem der Vollmaterialrohling mit einer Wandstärke von 2 - 20 mm hergestellt wird, wobei mittels des Kaltpressens eine Porosität von 20 - 50 Vol.% im Vollmaterialrohling eingestellt wird und im gesamten Vollmaterialrohling homogen verteilte offene Poren erzeugt werden, der Vollmaterialrohling anschließend bei einer Temperatur im Bereich von 650°C bis 850°C gesintert wird, bei der die homogen verteilten offenen Poren stabilisiert werden, und bei dem bei der Vakuuminfiltration eine PTFE-Supspension aus 55 bis 65 Gew.% PTFE, 33,5 bis 42,5 Gew.% H₂O und 0,5 bis 3 Gew.% Emulgatoren eingesetzt wird.

Vorzugsweise wird der Vollmaterialrohling mit einer Wandstärke von > 3 mm bis 20 mm, insbesondere von > 3,5 bis 20 mm kalt gepreßt. Weitere bevorzugte Bereiche sind 4 bis 20 mm und 5 bis 20 mm. Ein Vorteil des Verfahrens besteht darin, daß Vollmaterialrohlinge über einen großen Wandstärkebereich mit der beanspruchten Porosität hergestellt werden können. Bezüglich der Einstellung der Porosität sind bevorzugte Wertebereiche, 25 bis 47 Vol.-%, 20 bis 40 Vol.-%, insbesondere > 20 bis 40 Vol.-%.

Durch das Kaltpressen wird dem Grünling eine ausreichende Festigkeit verliehen, so daß eine weitere Verarbeitung möglich wird.

Es hat sich außerdem herausgestellt, daß ein Kaltpressen des Bronzepulvers zu einer homogeneren Porenstruktur führt, als dies mit einem sofortigen Sintervorgang erreicht werden kann. Beim Kaltpressen spielt die Korngrößenverteilung der Bronzepartikel für die sich einstellende Porosität nur eine untergeordnete Bedeutung. Außerdem ist der Anteil an offenen Poren größer, so daß eine bessere Befüllung der Poren mit PTFE im Wege der Vakuuminfiltration möglich ist. Der Sintervorgang wird zur Diffusion des Zinns in das Kupfer und zur Stabilisierung der sich ausgebildeten Porenstruktur eingesetzt. Insgesamt wird ein Vollmateriallager geschaffen, das aufgrund der homogenen Porenverteilung über die Wanddicke des Lagers gleichbleibende Gleiteigenschaften während der gesamten Lebensdauer des Lagers aufweist.
Der Einsatz von PTFE ermöglicht die Verwendung der Lager auch in der Lebensmittelindustrie.

Vorzugsweise erfolgt das Kaltpressen des Bronzepulvers in Richtung der Rotationssymmetrieachse des herzustellenden Vollmaterialrohlings. Bei der Herstellung von Lagerbuchsen erfolgt daher das Kaltpressen in Richtung der Buchsenlängsachse. Dadurch wird sichergestellt, daß der Druck gleichmäßig auf alle Bereiche des herzustellenden Vollmaterialrohlings verteilt wird.

Vorzugsweise wird das Kaltpressen mit einem Druck von 2 bis 4 t/cm², insbesondere 2,5 bis 3,5 t/cm² durchgeführt. Welcher Druck in diesem Bereich von 2 bis 4 t/cm² gewählt wird, hängt einerseits von der gewählten Komgröße des Bronzepulvers und andererseits von der gewünschten Porosität ab. Wenn eine geringe Porosität gewünscht wird, wird ein entsprechend größerer Druck eingesetzt. Größere Drücke sind auch dann erforderlich, wenn das Bronzepulver eine große Komgröße aufweist. Vorzugsweise wird eine Mischung aus vor- oder anlegiertem Bronzepulver und elementarem Zinn mit Komgrößen von 1 bis 100 µm, vorzugsweise von 10 bis 80 µm, insbesondere von 20 bis 40 µm, eingesetzt.

Vorzugsweise wird Bronzepulver mit 80 bis 95 Gew.-% Kupfer und 5 bis 20 Gew.-% Zinn verwendet.

Das Bronzepulver kann zusätzlich bis zu 11 Gew.-% Aluminium, Eisen, Wismut und/oder Blei aufweisen.

Die Sintertemperatur beträgt 650°C bis 850°C, insbesondere 600°C bis 850°C. Da das Sintern vor dem Einbringen des PTFE-Materials erfolgt, wird bei diesem Vorgang und bei diesen hohen Temperaturen das PTFE-Material nicht geschädigt.

Vorzugsweise wird der Sintervorgang während einer Zeitdauer von 1 bis 5 h, vorzugsweise 1 bis 3 Stunden durchgeführt. Die Sintertemperatur und die Zeitdauer sind so zu wählen, daß die Diffusion des Zinns in das Kupfer möglichst abgeschlossen ist und sich ein homogener Mischkristall gebildet hat, andererseits aber keine zu geringe Porosität durch Änderung des Porenvolumens entsteht. Außerdem ist darauf zu achten, daß das offene Porensystem erhalten bleibt. Auch die Zusammensetzung und die Art des Bronzepulvers (vorlegiert, anlegiert, Elementmischungen, Kombinationen daraus) spielen eine Rolle bei der Auswahl der Sintertemperaturen und -zeiten.

Vorzugsweise wird ein mit einem Preßhilfsmittel versetztes Bronzepulver verwendet.

Das Preßhilfsmittel erleichtert den Preßvorgang und hat den Vorteil, daß zum einen die Werkzeuge einem geringeren Verschleiß unterliegen und dadurch auch automatische Pressen zur Herstellung verwendet werden können und zum anderen darin, daß die Reibung an den Gesenkinnenwänden reduziert wird. Dadurch ergibt sich eine homogenere Poren- und Dichteverteilung im Grünling.

Die Vakuuminfiltration wird nach herkömmlichen Verfahren durchgeführt und erfolgt vorzugsweise bei einem Druck von 5 bis 10 mbar.

Nach der Vakuuminfiltration wird das Lager bei etwa 40° bis 100°C getrocknet, so daß das bei der Suspension verwendete Wasser und die Emulgatoren entfernt werden und lediglich das PTFE in den Poren zurückbleibt.

Nach der Vakuuminfiltration kann das poröse Lager zur Kalibrierung nochmals kalt gepreßt werden. Hierbei wird die endgültige Dichte und Festigkeit eingestellt. Beim Kalibrieren werden Drücke von vorzugsweise 3 bis 6 t/cm² eingesetzt.

Nach der Kalibrierung wird noch eine Einlaufschicht aufgebracht. Diese Einlaufschicht kann beispielsweise aus einem Gleitlack, gefüllt mit Festschmierstoffen wie z.B. PTFE, Graphit oder Blei, bestehen.

Das selbstschmierende Vollmateriallager aus Sinterbronze ist dadurch gekennzeichnet, dass es eine Wandstärke von 2 bis 20 mm und eine Porosität von 20 bis 50 Vol.% aufweist, dass 2 bis 10 Gew.% PTFE bezogen auf das Gesamtmaterial in die im gesamten Vollmaterial homogen verteilten offenen Poren des Sintermaterials eingelagert sind, und dass unterhalb eines Einlaufbereiches der PTFE-Anteil über die gesamte Wanddicke max. 10 % schwankt.

Dies bedeutet, daß bei beispielsweise einem PTFE-Anteil von 10 Gew.-% dieser Anteil zwischen 9% und 11% schwankt. Die geringe Schwankung des PTFE-Anteils ist auf die homogene Porenverteilung zurückzuführen, wobei in einem geringen Oberflächenbereich, der den Einlaufbereich bildet, der Porenanteil größer sein kann, so daß in diesem Bereich auch dann der PTFE-Anteil entsprechend höher ist. Dieser höhere PTFE-Anteil in diesem Einlaufbereich verbessert die Einlaufeigenschaften.

Die Wandstärke des Vollmateriallagers ist vorzugsweise > 3 mm bis 20 mm, insbesondere > 3,5 bis 20 mm, 4 bis 20 mm und 5 bis 20 mm.

Vorzugsweise weist die Sinterbronze 80 bis 95% Kupfer und 5 bis 20% Zinn auf. Die Sinterbronze kann zusätzlich noch bis zu 5 Gew.-% Aluminium, Eisen, Wismut und/oder Blei aufweisen.

Die offenen Poren weisen vorzugsweise eine Größe von 5 bis 125 µm auf. Die Poren der Sinterbronze sind ferner vorzugsweise weitgehend offen. Die Porosität der Sinterbronze beträgt vorzugsweise 20 bis 50 Vol.-%, insbesondere 25 bis 47 Vol.-%, 20 bis 40 Vol.-% und insbesondere > 20 bis 40 Vol.-%.

Beispielhafte Ausführungsformen der Erfindung werden nachfolgend anhand der Zeichnungen näher erläutert.

Es zeigen:
- Figur 1: eine erfindungsgemäße Lagerbuchse in perspektivischer Darstellung,
- Figur 2: einen Schnitt längs der Linie A-A in Figur 1 und
- Figur 3: eine vergrößerte Darstellung des Bereiches X in der Figur 2 und
- Figur 4: eine grafische Darstellung des PTFE-Gehaltes bzw. der Dichte in Abhängigkeit vom Preßdruck.

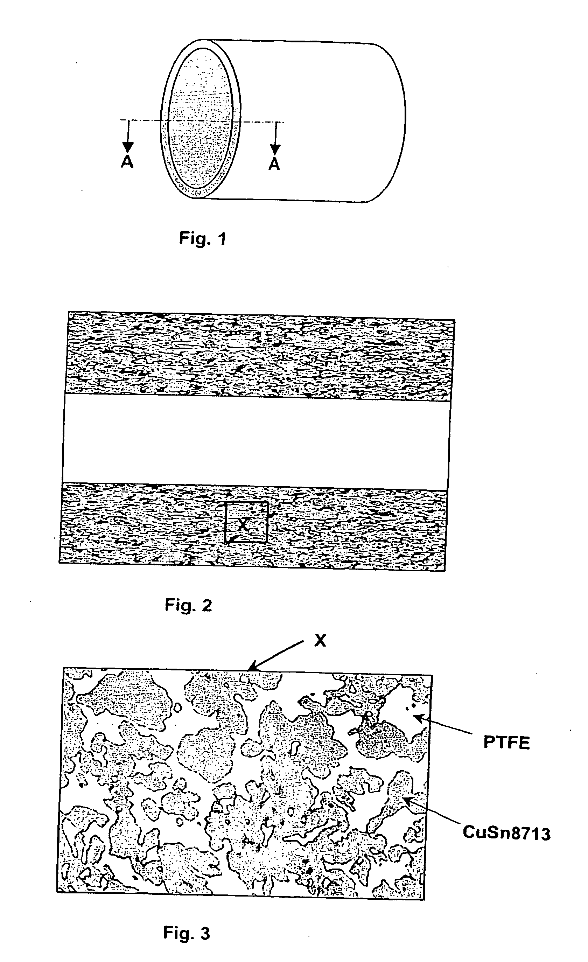

In der Figur 1 ist eine Lagerbuchse 1 aus Vollmaterial dargestellt, die aus einer Sinterbronze mit vakuuminfiltriertem PTFE besteht.

In der Figur 2 ist ein Schnitt durch die Lagerbuchse 1 längs der Linie A-A in Figur 1 dargestellt. In das Sinter-Bronze-Matrixmaterial 2 ist in die offenen Poren 3 PTFE eingelagert, wie dies in Figur 3 in vergrößerter Darstellung zu sehen ist. Es ist deutlich zu sehen, daß die Porenstruktur offen ist und daß die Poren homogen über die gesamte Wanddicke verteilt sind. Aufgrund dieser offenen Porenstruktur, die über die gesamte Wanddicke durchgängig vorhanden ist, ist es möglich, eine vollständige Auffüllung der Poren mit PTFE zu erreichen, so daß im wesentlichen gleichbleibende Gleiteigenschaften über die gesamte Wanddicke erhalten werden.

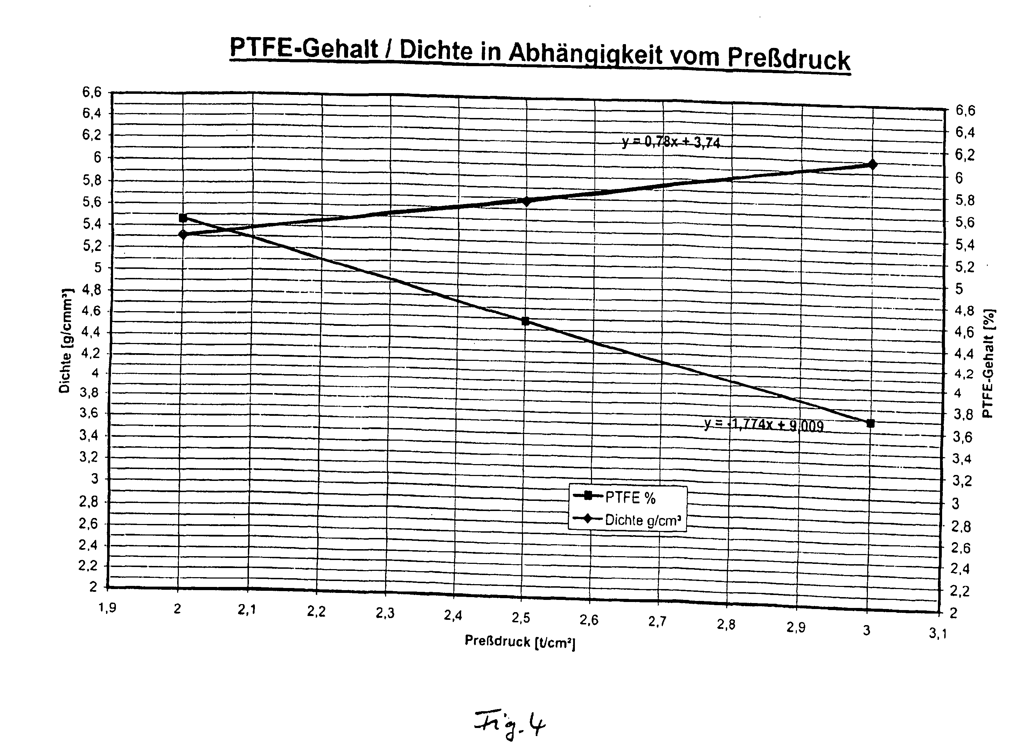

In der Figur 4 ist der PTFE-Gehalt bzw. die Dichte in Abhängigkeit vom Preßdruck dargestellt. Es zeigt sich, daß bei einem Preßdruck von 2 bis 3 t/cm² mit zunehmendem Preßdruck die Dichte zunimmt und gleichzeitig die Porosität abnimmt, was dementsprechend zu einem geringeren PTFE-Anteil in dem Vollmaterial führt. Über den Preßdruck kann somit die Porosität und dadurch der gewünschte PTFE-Anteil maßgeblich eingestellt werden, was wiederum für die Gleiteigenschaften von Bedeutung ist.

In der nachfolgenden Tabelle sind für verschiedene Preßdrücke und Bronzematerialien die Parameter wie Gründichte, Porosität, PTFE-Gehalte, usw. zusammengefaßt. Die Bezeichnung Eckart Bromix 90/10 bedeutet, daß es sich hier um ein Pulvermaterial der Firma Eckart Bromix handelt, das 90% Kupfer und 10% Zinn aufweist. Bei der Bezeichnung NA K10+3% Sn handelt es sich um ein vorlegiertes Bronzepulver der Norddeutschen Affinerie mit einem Anteil von 90 % Kupfer und 10 % Zinn, dem zusätzlich 3 % elementares Zinn zugemischt werden.

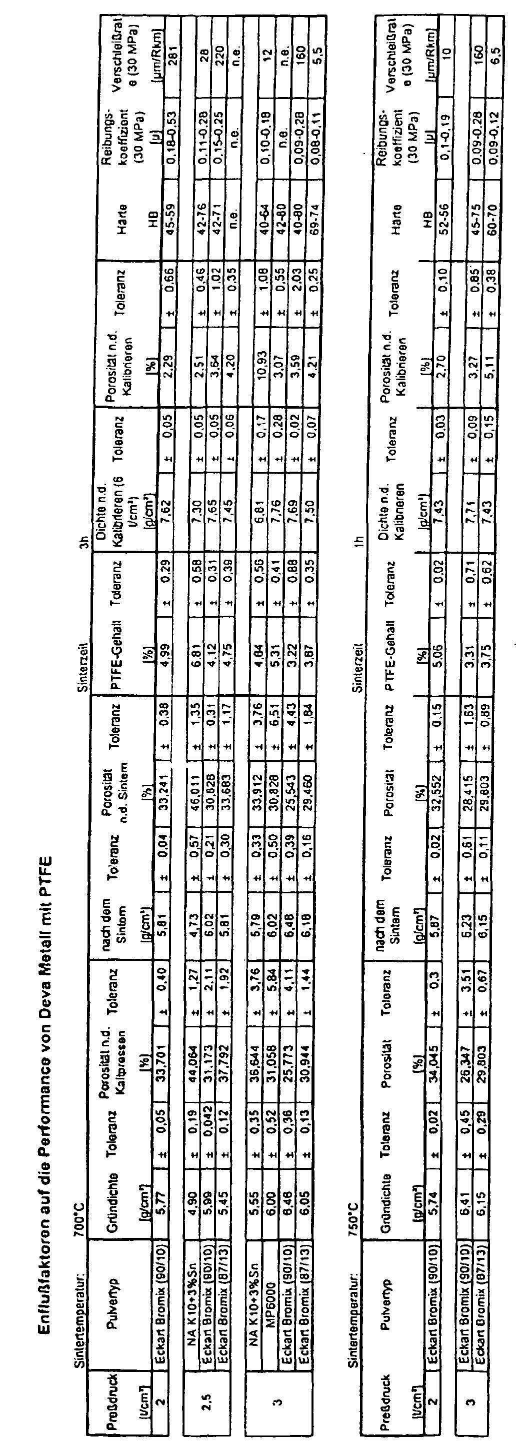

Wie die Beispiele zeigen, liegt die Porosität im wesentlichen im Bereich der Porosität nach dem Kaltpressen, was zeigt, daß der Sintervorgang lediglich zur Stabilisierung der Porenstruktur dient und nur einen geringen Einfluß auf die Porosität ausübt.

Die Reibungskoeffizienten mit Werten im Bereich von µ = 0,08 bis µ = 0,10 sind denen der herkömmlichen graphithaltigen Legierungen deutlich überlegen. Deren Reibwerte liegen im Bereich von etwa µ = 0,15 bis µ = 0,25 im Trockenlauf. Die Verschleißwerte der PTFE-infiltrierten Lager sind unter gleichen Testbedingungen um den Faktor 5 bis etwa 20 geringer.

## Patentansprüche

1. Verfahren zur Herstellung von selbstschmierenden, wartungsfreien Lagern, bei dem mindestens Bronzepulver eingesetzt wird, das Bronzepulver vor dem Sintern in einem formgebenden Werkzeug zu einem Vollmaterialrohling kalt gepresst wird, der Vollmaterialrohling in einem Ofen unter einer Schutzgasatmosphäre gesintert wird und die Poren der Sinterbronze durch Vakuuminfiltration mit einer PTFE aufweisenden Suspension gefüllt werden, **dadurch gekennzeichnet,**
**dass** der Vollmaterialrohling mit einer Wandstärke von 2 bis 20 mm hergestellt wird, wobei mittels des Kaltpressens eine Porosität von 20 bis 50 Vol.% im Vollmaterialrohling eingestellt wird und im gesamten Vollmaterialrohling homogen verteilte offene Poren erzeugt werden,
**dass** der Vollmaterialrohling anschließend bei einer Temperatur im Bereich von 650°C bis 850°C gesintert wird, bei der die homogen verteilen offenen Poren stabilisiert werden, und
**dass** bei der Vakuuminfiltration eine PTFE-Suspension aus 55 bis 65 Gew.% PTFE, 33,5 bis 42,5 Gew.% H₂O und 0,5 bis 3 Gew.% Emulgatoren eingesetzt wird.

2. Verfahren nach Anspruch 1, **dadurch gekennzeichnet, dass** das Kaltpressen in Richtung der Rotationssymmetrieachse des herzustellenden Vollmaterialrohlings durchgeführt wird.

3. Verfahren nach Anspruch 1 oder 2, **dadurch gekennzeichnet, dass** das Kaltpressen mit einem Druck von 196,133 bis 392,266 MPa durchgeführt wird.

4. Verfahren nach einem der Ansprüche 1 bis 3, **dadurch gekennzeichnet, dass** Bronzepulver und elementares Zinn mit Korngrößen von 1 bis 100 µm eingesetzt werden.

5. Verfahren nach Anspruch 4, **dadurch gekennzeichnet, dass** Bronzepulver und elementares Zinn mit Horngrößen von 20 bis 40 µm eingesetzt werden.

6. Verfahren nach einem der Ansprüche 1 bis 5, **dadurch gekennzeichnet, dass** Bronzepulver mit 80 bis 95 Gew.% Kupfer und 5 bis 20 Gew.% Zinn eingesetzt wird.

7. Verfahren nach einem der Ansprüche 1 bis 6, **dadurch gekennzeichnet, dass** Bronzepulver mit bis zu 11 Gew.% Aluminium, Eisen, Wismut und/oder Blei verwendet wird.

8. Verfahren nach einem der Ansprüche 1 bis 7, **dadurch gekennzeichnet, dass** der Sintervorgang über eine Zeitdauer von 1 bis 5 h, vorzugsweise 1 bis 3 h, durchgeführt wird.

9. Verfahren nach einem der Ansprüche 1 bis 8, **dadurch gekennzeichnet, dass** ein mit Presshilfsmittel versetztes Bronzepulver verwendet wird.

10. Verfahren nach einem der Ansprüche 1 bis 9, **dadurch gekennzeichnet, dass** die Vakuuminfiltration bei einem Druck von 500 bis 1000 Pa durchgeführt wird.

11. Verfahren nach einem der Ansprüche 1 bis 10, **dadurch gekennzeichnet, dass** das Lager nach der Vakuuminfiltration bei etwa 40°C bis 100°C getrocknet wird.

12. Verfahren nach einem der Ansprüche 1 bis 11, **dadurch gekennzeichnet, dass** nach der Vakuuminfiltration das Lager zur Kalibrierung kalt gepresst wird.

13. Verfahren nach Anspruch 12, **dadurch gekennzeichnet, dass** das Kalibrieren mit einem Druck von 294,199 bis 588,399 MPa durchgeführt wird.

14. Verfahren nach einem der Ansprüche 1 bis 13, **dadurch gekennzeichnet, dass** nach der Kalibrierung eine Einlaufschicht aufgebracht wird.

15. Selbstschmierendes Vollmateriallager aus Sinterbronze, **dadurch gekennzeichnet,**
**dass** es eine Wandstärke von 2 bis 20 mm und eine Porosität von 20 bis 50 Vol.% aufweist,
**dass** 2 bis 10 Gew.% PTFE bezogen auf das Gesamtmaterial in die im gesamten Vollmaterial homogen verteilten offenen Poren des Sintermaterials eingelagert sind, und
**dass** unterhalb eines Einlaufbereiches der PTFE-Anteil über die gesamte Wanddicke max. 10% schwankt.

16. Lager nach Anspruch 15, **dadurch gekennzeichnet, dass** die Wanddicke max. 4% ±1% über die gesamte Wanddicke schwankt.

17. Lager nach Anspruch 15 oder 16, **dadurch gekennzeichnet, dass** die Sinterbronze 8 bis 95% Kupfer und 5 bis 20% Zinn aufweist.

18. Lager nach Anspruch 15 bis 17, **dadurch gekennzeichnet, dass** die Sinterbronze bis zu 11 Gew.% Aluminium, Eisen, Wismut und/oder Blei aufweist.

## Claims

1. Process for producing self-lubricating, maintenance-free bearings, in which at least bronze powder is used, the bronze powder, prior to sintering, is cold-pressed in a shaping die to form a solid-material blank, the solid-material blank is sintered in a furnace under a protective gas atmosphere, and the pores in the sintered bronze are filled with a suspension that includes PTFE by vacuum infiltration, **characterized**
**in that** the solid-material blank is produced with a wall thickness of from 2 to 20 mm, with a porosity of from 20 to 50% by volume being established in the solid-material blank by means of the cold-pressing, and open pores which are distributed homogenously throughout the entire solid-material blank being produced,
**in that** the solid-material blank is then sintered at a temperature in the range from 650°C to 850°C, at which the homogenously distributed open pores are stabilized, and
**in that** a PTFE suspension comprising 55 to 65% by weight of PTFE, 33.5 to 42.5% by weight of H₂O and 0.5 to 3% by weight of emulsifiers is used in the vacuum infiltration.

2. Process according to Claim 1, **characterized in that** the cold-pressing is carried out in the direction of the axis of rotational symmetry of the sold-material blank that is to be produced.

3. Process according to Claim 1 or 2, **characterized in that** the cold-pressing is carried out at a pressure of from 196.133 to 392.266 MPa.

4. Process according to one of Claims 1 to 3, **characterized in that** bronze powder and elemental tin with grain sizes of from 1 to 100 µm are used.

5. Process according to Claim 4, **characterized in that** bronze powder and elemental tin with grain sizes of from 20 to 40 µm are used.

6. Process according to one of Claims 1 to 5, **characterized in that** bronze powder containing 80 to 95% by weight of copper and 5 to 20% by weight of tin is used.

7. Process according to one of Claims 1 to 6, **characterized in that** bronze powder containing up to 11% by weight of aluminium, iron bismuth and/or lead is used.

8. Process according to one of Claims 1 to 7, **characterized in that** the sintering operation is carried out over a period of from 1 to 5 h, preferably 1 to 3 h.

9. Process according to one of Claims 1 to 8, **characterized in that** a bronze powder mixed with pressing aid is used.

10. Process according to one of Claims 1 to 9, **characterized in that** the vacuum infiltration is carried out at a pressure from 500 to 100 Pa.

11. Process according to one of Claims 1 to 10, **characterized in that** after the vacuum infiltration the bearing is dried at approximately 40°C to 100°C.

12. Process according to one of Claims 1 to 11, **characterized in that** after the vacuum infiltration the bearing is cold-pressed for calibration purposes.

13. Process according to Claim 12, **characterized in that** the calibration is carried out at a pressure of from 294.199 to 588.399 MPa.

14. Process according to one of Claims 1 to 13, **characterized in that** a run-in layer is applied after the calibration.

15. Self-lubricating solid-material bearing made from sintered bronze, **characterized**
**in that** it has a wall thickness of from 2 to 20 mm and a porosity of from 20 to 50% volume,
**in that** from 2 to 10% by weight of PTFE, based on the total material, is incorporated in the open pores of the sintered material, which are distributed homogenously throughout the entire solid material, and
**in that** below a run-in region the PTFE content fluctuates by at most 10% over the entire wall thickness.

16. Bearing according to Claim 15, **characterized in that** the wall thickness fluctuates by at most 4% ± 1% over the entire wall thickness.

17. Bearing according to Claim 15 or 16, **characterized in that** the sintered bronze contains 8 to 95% of copper and 5 to 20% of tin.

18. Bearing according to Claim 15 to 17, **characterized in that** the sintered bronze includes up to 11% by weight of aluminium, iron, bismuth and/or lead.

## Revendications

1. Procédé de production de paliers autolubrifiants, sans entretien, dans lequel on utilise au moins de la poudre de bronze, la poudre de bronze est comprimée à froid avant le frittage dans un outil de mise en forme pour fournir une pièce brute en matériau massif, la pièce brute en matériau massif est frittée dans un four dans une atmosphère de gaz protecteur et les pores du bronze fritté sont remplis par infiltration sous vide d'une suspension contenant du PTFE, **caractérisé en ce que**
la pièce brute en matériau massif est produite avec une épaisseur de paroi de 2 à 20 mm, la compression à froid permettant d'établir une porosité de 20 à 50 % en volume dans la pièce brute en matériau massif et des pores ouverts répartis de manière homogène dans toute la pièce brute en matériau massif sont produits,
**en ce que** la pièce brute en matériau massif est ensuite frittée à une température dans la plage de 650°C à 850°C, à laquelle les portes ouverts répartis de manière homogène sont stabilisés, et
**en ce que** lors de l'infiltration sous vide, une suspension à base de PTFE contenant de 55 à 65 % en poids de PTFE, 33,5 à 42,5 % en poids de H₂O et 0,5 à 3 % en poids d'émulsifiants est utilisée.

2. Procédé selon la revendication 1, **caractérisé en ce que** la compression à froid est réalisée dans la direction de l'axe de symétrie de révolution de la pièce brute en matériau massif à produire.

3. Procédé selon la revendication 1 ou 2, **caractérisé en ce que** la compression à froid est réalisée à une pression de 196,133 à 392,266 MPa.

4. Procédé selon l'une quelconque des revendications 1 à 3, **caractérisé en ce que** de la poudre de bronze et de l'étain élémentaire sont utilisés avec des grosseurs de grain de 1 à 100 µm.

5. Procédé selon la revendication 4, **caractérisé en ce que** de la poudre de bronze et de l'étain élémentaire sont utilisés avec des grosseurs de grain de 20 à 40 µm.

6. Procédé selon l'une quelconque des revendications 1 à 5, **caractérisé en ce que** de la poudre de bronze est utilisée avec 80 à 95 % en poids de cuivre et 5 à 20 % en poids d'étain.

7. Procédé selon l'une quelconque des revendications 1 à 6, **caractérisé en ce que** de la poudre de bronze avec jusqu'à 11 % en poids d'aluminium, de fer, de bismuth et/ou de plomb est utilisée.

8. Procédé selon l'une quelconque des revendications 1 à 7, **caractérisé en ce que** l'opération de frittage est effectuée pendant une durée de 1 à 5 h, de préférence de 1 à 3 h.

9. Procédé selon l'une quelconque des revendications 1 à 8, **caractérisé en ce que** l'on utilise une poudre de bronze additionnée d'un auxiliaire de compression.

10. Procédé selon l'une quelconque des revendications 1 à 9, **caractérisé en ce que** l'infiltration sous vide est réalisée à une pression de 500 à 1000 Pa.

11. Procédé selon l'une quelconque des revendications 1 à 10, **caractérisé en ce que** le palier est séché après l'infiltration sous vide à environ 40°C à 100°C.

12. Procédé selon l'une quelconque des revendications 1 à 11, **caractérisé en ce que** le palier est comprimé à froid après l'infiltration sous vide en vue de son étalonnage.

13. Procédé selon la revendication 12, **caractérisé en ce que** l'étalonnage est réalisé à une pression de 294,199 à 588,399 MPa.

14. Procédé selon l'une quelconque des revendications 1 à 13, **caractérisé en ce que** l'on applique une couche de rodage après l'étalonnage.

15. Palier en matériau massif autolubrifiant en bronze fritté, **caractérisé en ce que**
il présente une épaisseur de paroi de 2 à 20 mm et une porosité de 20 à 50 % en volume,
de 2 à 10 % en poids de PTFE par rapport au matériau total sont introduits dans les pores ouverts du matériau fritté répartis de manière homogène dans tout le matériau massif, et
en dessous d'une région de rodage, la proportion de PTFE fluctue de 10% au maximum sur toute l'épaisseur de paroi.

16. Palier selon la revendication 15, **caractérisé en ce que** l'épaisseur de paroi fluctue de 4% ± 1% au maximum sur toute l'épaisseur de paroi.

17. Palier selon la revendication 15 ou 16, **caractérisé en ce que** le bronze fritté présente de 8 à 95 % de cuivre et de 5 à 20 % d'étain.

18. Palier selon les revendications 15 à 17, **caractérisé en ce que** le bronze fritté présente jusqu'à 11 % en poids d'aluminium, de fer, de bismuth et/ou de plomb.
